# EUROPÄISCHE PATENTSCHRIFT

(11) **EP 1 382 870 B1**
(45) Veröffentlichungstag und Bekanntmachung des Hinweises auf die Patenterteilung: **31.12.2008**
(21) Anmeldenummer: 03014828.2
(22) Anmeldetag: 30.06.2003
(51) Int. Cl.: F16D 3/62

(54) **Elastische Kupplung**
Elastic coupling
Accouplement élastique

(30) Priorität: 16.07.2002 DE 10232286
(43) Veröffentlichungstag der Anmeldung: 21.01.2004
(73) Patentinhaber: Carl Freudenberg KG, 69469 Weinheim (DE); A. FRIEDR. FLENDER AG, D-46395 Bocholt (DE)
(72) Erfinder: Cordts, Detlef, 16352 Schönwalde (DE); Peters, Robert, 46393 Bocholt (DE); Meyer, Christian, 16761 Henningsdorf (DE)

(56) Entgegenhaltungen:
- EP-A- 0 592 297
- DE-A- 2 902 991
- DE-A- 4 303 772
- DE-U- 9 202 412
- GB-A- 110 683
- GB-A- 722 734

## Beschreibung

Die Erfindung betrifft eine Kupplung zur Verbindung eines treibenden und eines angetriebenen Maschinenteils wie Wellen, Radnaben oder dergleichen aus einer Zwischenwelle und an den Enden der Zwischenwelle angeordneten Gelenkhebelkupplungen, die je mindestens drei gleiche Gelenkhebel aufweisen, die über an ihren Enden angeordnete elastische Gelenke einerseits an der Zwischenwelle und andererseits an dem zu verbindenden benachbarten Maschinenteil angreifen.

Kupplungen dieser Art sind an sich bekannt. Sie ermöglichen eine biegeelastische Verbindung von Wellen miteinander für verschiedene Einsatzzwecke. Diese Kupplungen sind recht drehsteif. Ihre Aufgabe ist der Ausgleich von radialem und achsialem Versatz.

### Stand der Technik

In der DE 42 05 666 C2 ist eine solche Kupplung gezeigt, bei der die Gelenke der Gelenkhebel an der Zwischenwelle über sekantial ausgerichtete Anlenkbolzen und an einer zu verbindenden Welle über axial ausgerichtete Anlenkbolzen angreifen. Diese Kupplungen haben sich bewährt. Die an den zu verbindenden Wellen angebrachten Elastomerlager werden bei Auslenkung der Kupplung vorwiegend kardanisch in zwei Achsen verformt. Es ist deshalb notwendig, bei diesen Lagern Sphärolager als elastische Elemente einzusetzen. Dieses begrenzt die radiale Lebensdauer der Sphärolager, die nicht beliebig gesteigert werden kann. Auch benötigen die Lager einen erheblichen Bauraum.

Durch die DE 92 02 412 U ist eine Kupplung bekannt geworden, die zur Verbindung eines treibenden und eines angetriebenen Maschinenteils dient und die aus einer Zwischenwelle und an den Enden der Zwischenwelle angeordneten Gelenkhebel-Kupplungen besteht, die über an ihren Enden angeordnete elastische Gelenke einerseits an der Zwischenwelle und andererseits an dem zu verbindenden benachbarten Maschinenteil angreifen, wobei die Achsen der elastischen Gelenke eines jeden Gelenkhebels senkrecht auf eine durch die Achse der Zwischenwelle bzw. den Achsen der zu verbindenen Maschinenteile gelegte und zu dem Gelenkhebel parallel verlaufende Achsialebene ausgerichtet sind.

### Darstellung der Erfindung

Der Erfindung liegt die Aufgabe zugrunde, die Lebensdauer der hier in Frage stehenden Kupplungen zu erhöhen, außerdem soll bei gleichem oder sinkendem Bauraum für die Kupplung die Übertragung von höheren Radiallasten möglich sein.

Die Lösung der gestellten Aufgabe wird durch die Merkmale des Anspruchs 1 erreicht. Die Unteransprüche 2 bis 12 stellen günstige Weiterbildungen des Erfindungsgedankens dar.

Bei der neuen Kupplung werden die Achsen der elastischen Gelenke eines jeden Gelenkhebels senkrecht auf eine durch die Achse der Zwischenwelle bzw. den Achsen der zu verbindenden Wellen gelegte und zu den Gelenkhebeln parallel verlaufende Axialebene ausgerichtet. Diese Anordnung der Gelenke hat zur Folge, dass die Deformation der Elastomerlager vorwiegend durch Torsion erfolgt. Diese homogene Deformation ist für die Lager besser zu ertragen. Nur ein sehr kleiner Teil der Auslenkung ist kardanisch. Die eingesetzten Lagerelemente können besser auf Radiallast optimiert werden. Ihre sphärische Ausgestaltung kann größere Radien haben und im Extremfall können zylindrische Elemente eingesetzt werden.

Die Gelenkhebel mit dem Gelenk sind sternförmig zueinander angeordnet. Die Achsen der Gelenke eines jeden Gelenkhebels verlaufen dabei parallel zueinander. Die bevorzugte Zahl der eingesetzten Gelenkhebel beträgt vier. In diesem Fall kann die Achsialebene durch die Mitte der beiden sich gegenüberliegenden Gelenkhebel führen. Eine solche Möglichkeit besteht auch beim Einsatz von sechs Gelenkhebeln.

Die Achsen einer Gelenkhebelkupplung werden so ausgerichtet, dass sie in einer Radialebene zu liegen kommen. Hierfür sind die Zwischenwelle und die zu verbindenden Wellen mit Anschlußflanschen ausgestattet, die radial und axial vorstehende Klauen haben. Diese Klauen tragen die Lagerzapfen für die Gelenke. Dabei können die Lagerzapfen integral mit den Lagern verbunden sein oder auch gesondert hergestellt an die Klauen gebracht werden. Bei einer Reihe von Anwendungszwecken ist es günstig, wenn die Lagerzapfen eine Kegelform mit einem nicht hemmenden Kegelsitz haben. Eine leichtere Demontage ist hier möglich.

Die Gelenke können mit Sphärolagern versehen sein. Es ist jedoch vorteilhaft, wenn wenigstens eines der Gelenke eines Gelenkhebels mit einem Zylinderlager ausgestattet ist. Die Zylinderlager gestatten die Übertragung höherer Kräfte. Die Elastomerschicht der Lager wird mit den angrenzenden Metallteilen bevorzugt durch Vulkanisation verbunden.

In günstiger Weise werden die Gelenke an ihren äußeren Lagerschalen mit vorstehenden Haltenasen versehen, die zusammen mit einem Anschlag an der Kupplung als Verliersicherung bei einer Beschädigung des Elastomers dienen.

Aus Kostengründen können die Anschlußflansche und die Lagerzapfen gesondert hergestellt werden. In diesem Fall sind die Lagerzapfen über Stehbolzen an der Zwischenwelle bzw. den zu verbindenden Wellen befestigt.

Bei einer Verbindung von Wellen, die größeren Verlagerungen unterworfen sein können, ist es günstig, wenn die Gelenkhebel in Achsrichtung der Zwischenwelle lamellenartig ausgebildet sind. Diese Lamellen können einen Teil der Verlagerungen übernehmen.

### Kurzbeschreibung der Zeichnung

Es zeigt:
- Fig. 1: die Kupplung in der Stirnansicht,
- Fig. 2: eine Gelenkhebelkupplung in der Seitenansicht ohne Gelenkhebel und Gelenke,
- Fig. 3: die Kupplung im Längsschnitt ohne Gelenke und Gelenkhebel und
- Fig. 4: eine Stirnansicht einer Gelenkhebelkupplung mit sechs Gelenkhebeln.

### Ausführung der Erfindung

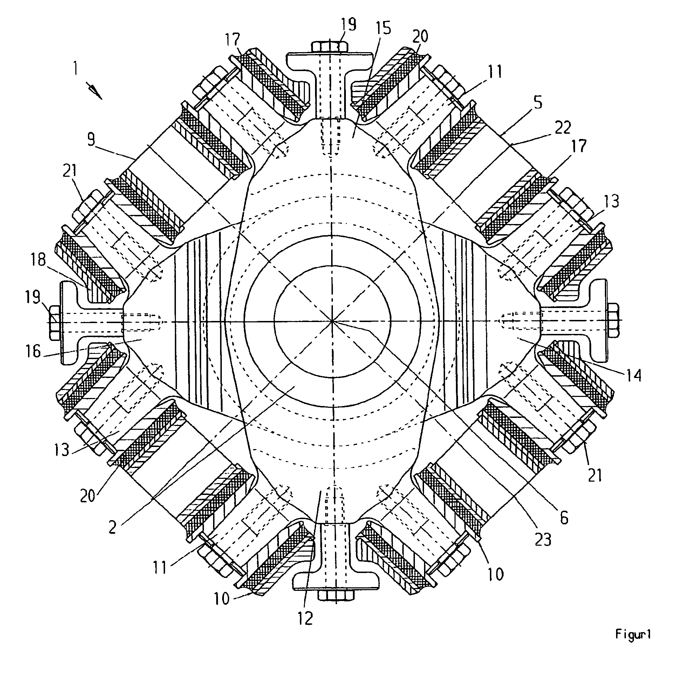

Die in der Figur 1 in der Stirnansicht dargestellte Kupplung 1 dient zur Verbindung zweier Wellenstümpfe 2 und 3, von denen in der Stirnansicht nur der Wellenstumpf 3 sichtbar ist. Die Gelenkhebelkupplungen 5 sind sternförmig um die Achsen 6 und 7 der zu verbindenden Wellenstümpfe 2 und 3, bzw. die Achsen 8 der Zwischenwelle 4 angebracht. Es sind vier Gelenkhebel 9 gleicher Bauart vorgesehen, die über an ihren Enden angeordnete Gelenke 10 an den Lagerzapfen 11 des Anschlußflansches 12 der Zwischenwelle 4 bzw. an den Lagezapfen 13 des Anschlußflansches 14 des Wellenstumpfs 2 angreifen. Die Lagerzapfen 11 und 13 sind integral mit den Klauen 15 und 16 an den Anschlußflanschen 12 und 14 verbunden. Die Lagerzapfen 11 und 13 sind kegelförmig mit einem nicht hemmenden Kegelsitz ausgebildet. Alle Gelenke 10 sind mit den Zylinderlagern 17 ausgestattet. Die Gelenkhebel 9 haben an ihren äußeren Enden vorstehende Haltenasen 18, über welche sie durch die Schrauben 19 an den Flanschen 12, 14 gehalten werden. Dies ist auch eine zusätzliche Sicherung für denn Fall, dass eine der Elastomerschichten 20 beschädigt wird.

Die Achsen 21 der elastischen Gelenke 10 eines jeden Gelenkhebels 9 sind senkrecht auf die durch die Achse 8 der Zwischenwelle 4 bzw. den Achsen 6 und 7 der zu verbindenden Wellenstümpfe 2 und 3 gelegte und zu den Gelenkhebeln 9 parallel verlaufende Achsialebene 22 bzw. 23 ausgerichtet. Dabei sind die Achsen 21 der Gelenke 10 eines jeden Gelenkhebels 9 parallel zueinander angeordnet.

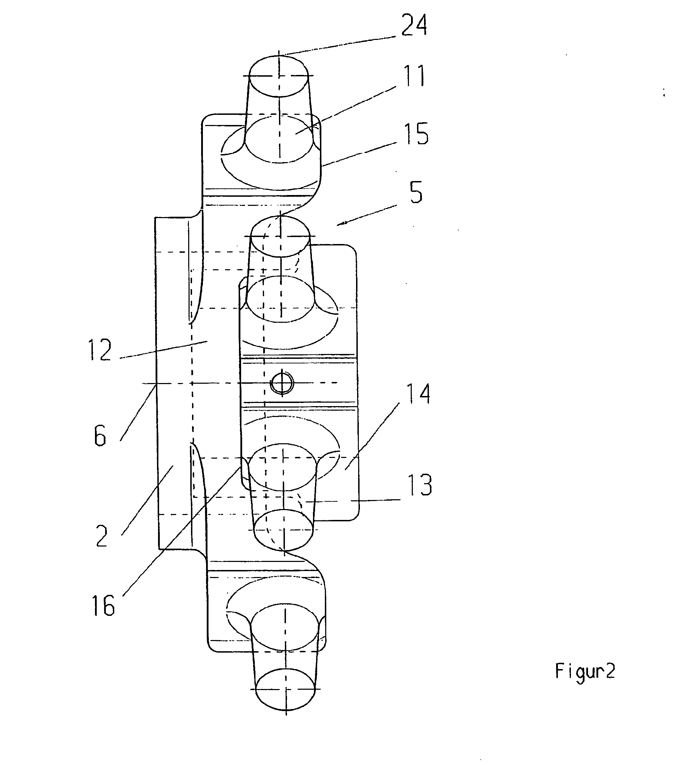

In der Figur 2 ist eine Gelenkhebelkupplung 5 in der Seitenansicht gezeigt. Dabei wurden die Gelenke selbst mit den Gelenkhebeln weggelassen, um die Zuordnung der Lagerzapfen 11 und 13 zueinander sichtbar zu machen. Die Lagerzapfen 11 und 13 und damit die Achsen 21 der Gelenke 10 liegen in einer Radialebene 24. Die Anschlußflansche 12 und 14 haben radial und axial vorstehende Klauen 15, 16, welche die Lagerzapfen 11 und 13 für die Gelenke 10 tragen. Die Ausbildung der Anschlußflansche 12 und 14 mit den vorstehenden Klauen 15 und 16 ermöglicht ein quasi Ineinanderstecken der Flansche, so dass die Lagerzapfen 11 und 13 in der gleichen Radialebene 24 zu liegen kommen.

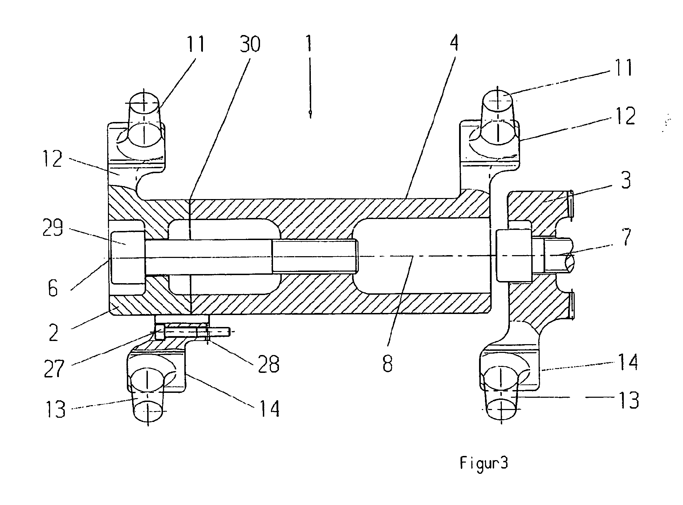

In der Figur 3 ist die Kupplung 1 ohne Gelenkhebel 9 und Gelenke 10 im Schnitt gezeigt. An ein nicht näher gezeigtes Getriebe ist der Anschlußflansch 14 über die Schrauben 27 angeschraubt. Um eine gute Kraftübertragung zu gewährleisten ist die Stirnverzahnung 28 am Anschlußflansch 14 angebracht, welche in eine entsprechende Stirnverzahnung am Getriebe eingreift. Hierdurch können außergewöhnlich hohe Kräfte übertragen werden. Über die in Figur 3 nicht eingezeichneten Gelenkhebel und Gelenke wird der Anschlußflansch 14 mit dem Anschlußflansch 12 der Zwischenwelle 4 verbunden. Aus fertigungs- und montagetechnischen Gründen ist die Zwischenwelle 4 geteilt. Beide Teile der Zwischenwelle 4 werden durch die Schraube 29 zusammengehalten, wobei an der Anschlußstelle ebenfalls eine Stirnverzahnung 30 angebracht ist. Der zweite Anschlußflansch 12 der Zwischenwelle 4 ist über die nicht gezeigten Gelenkhebel und Gelenke mit dem Anschlußflansch 14 des Wellenstumpfs 3 verbunden, welche an eine nicht näher gezeigte Radnabe angeschlossen ist. Das von dem Getriebe kommende Drehmoment wird folglich über die Flansche 14 und 12 bzw. 12 und 14 und die daran befestigten Lagerzapfen 11 und 13, sowie den einzusetzen Gelenkhebeln mit Gelenken auf das Rad, beispielsweise einer Straßenbahn übertragen.

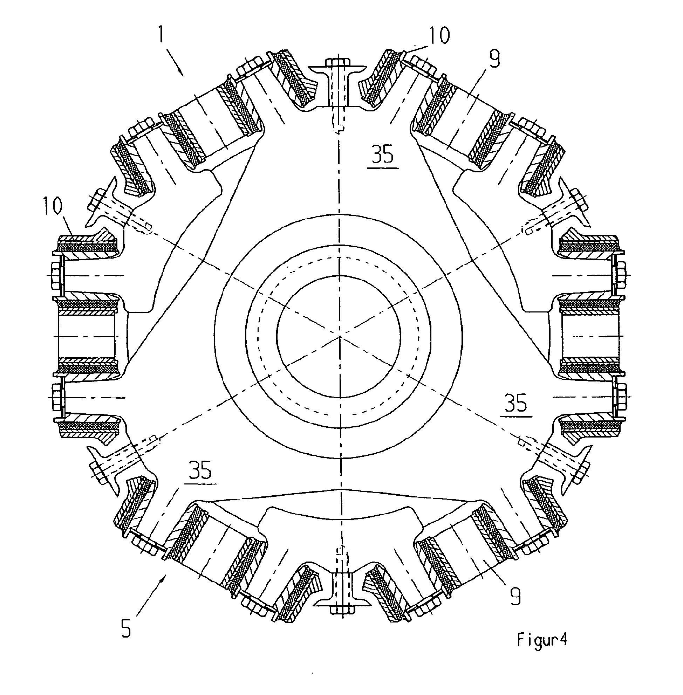

In der Figur 4 ist eine Ausführungsform der Kupplung 1 gezeigt, bei der die Gelenkhebelkupplung 5 sechs Gelenkhebel 9 mit den zugehörigen Gelenken 10 hat. Die Anschlußflansche sind in diesem Fall mit jeweils drei Klauen 35 versehen.

## Patentansprüche

1. Kupplung (1) zur Verbindung eines treibenden und eines angetriebenen Maschinenteils (2, 3) wie Wellen, Radnaben oder dergleichen aus einer Zwischenwelle (4) und an den Enden der Zwischenwelle (4) angeordneten Gelenkhebelkupplungen (5), die je mindestens drei gleiche Gelenkhebel (9) aufweisen, die über an ihren Enden angeordnete elastische Gelenke (10) einerseits an der Zwischenwelle (4) und andererseits an dem zu verbindenden benachbarten Maschinenteil (2, 3) angreifen, wobei die Achsen (21) der elastischen Gelenke (10) eines jeden Gelenkhebels (9) senkrecht auf eine durch die Achse (8) der Zwischenwelle (4) bzw. den Achsen (6, 7) der zu verbindenden Maschinenteile (2, 3) gelegte und zu den Gelenkhebeln (9) parallel verlaufende Achsialebene (22, 23) ausgerichtet sind, **dadurch gekennzeichnet, dass** die Zwischenwelle (4) und die zu verbindenden Maschinenteile (2, 3) mit Anschlußflanschen (12, 14) ausgestattet sind, die radial und axial vorstehende Klauen (15, 16) haben, welche die Lagerzapfen (11, 13) für die Gelenke (10) tragen, wobei die Lagerzapfen (11, 13) der Klauen (15, 16) ebenfalls parallel zueinander als auch symmetrisch zu dem Zentrum der Kupplung angeordnet sind.

2. Kupplung nach Anspruch 1, **dadurch gekennzeichnet, dass** die Achsen (21) der Gelenke (10) eines jeden Gelenkhebels (9) parallel zueinander verlaufen.

3. Kupplung nach einem der Ansprüche 1 oder 2, **dadurch gekennzeichnet, dass** bei vier oder sechs Gelenkhebeln (9) die Achsialebene (22, 23) durch die Mitte der beiden sich gegenüberliegenden Gelenkhebel (9) führt.

4. Kupplung nach einem der Ansprüche 1 bis 3, **dadurch gekennzeichnet, dass** die Achsen (21) der Gelenkhebelkupplungen (5) in einer Radialebene (24) liegen.

5. Kupplung nach einem der Ansprüche 1 bis 4, **dadurch gekennzeichnet, dass** die Lagerzapfen (11, 13) integral mit den Klauen (15, 16) verbunden sind.

6. Kupplung nach einem der Ansprüche 1 bis 5, **dadurch gekennzeichnet, dass** die Lagerzapfen (11, 13) eine Kegelform mit einem hemmenden oder einem nicht hemmenden Kegelsitz haben.

7. Kupplung nach einem der Ansprüche 1 bis 6, **dadurch gekennzeichnet, dass** die Gelenke (10) mit Sphärolagern versehen sind.

8. Kupplung nach einem der Ansprüche 1 bis 7, **dadurch gekennzeichnet, dass** wenigstens eines der Gelenke (10) eines Gelenkhebels (9) mit einem Zylinderlager ausgestattet ist.

9. Kupplung nach einem der Ansprüche 1 bis 8, **dadurch gekennzeichnet, dass** die elastomere Schicht (17) der Lager mit den angrenzenden Metallteilen durch Vulkanisation verbunden ist.

10. Kupplung nach einem der Ansprüche 1 bis 9, **dadurch gekennzeichnet, dass** die Gelenkhebel (9) an ihren äußeren Lagerschalen mit vorstehenden Haltenasen (18) versehen sind,

11. Kupplung nach einem der Ansprüche 1 bis 10, **dadurch gekennzeichnet, dass** die Lagerzapfen (36) über Stehbolzen (37) an den Flanschen (12, 14) der Zwischenwelle (4) bzw. den zu verbindenden Maschinenteilen (7, 8) befestigt sind.

12. Kupplung nach einem der Ansprüche 1 bis 11, **dadurch gekennzeichnet, dass** die Gelenkhebel (9) in Achsrichtung der Zwischenwelle (4) lamellenartig ausgebildet sind.

## Claims

1. Coupling (1) for connecting a driving machine part (2) and a driven machine part (3), such as shafts, wheel hubs or the like, comprising an intermediate shaft (4) and jointed-lever couplings (5), which are arranged at the ends of the intermediate shaft (4) and each have at least three identical jointed levers (9), which act by means of elastic joints (10) arranged at their ends on the one hand on the intermediate shaft (4) and on the other hand on the adjacent machine part (2, 3) to be connected, the axes (21) of the elastic joints (10) of each jointed lever (9) being aligned perpendicularly in relation to an axial plane (22, 23) made to pass through the axis (8) of the intermediate shaft (4) or the axes (6, 7) of the machine parts (2, 3) to be connected and running parallel to the jointed levers (9), **characterized in that** the intermediate shaft (4) and the machine parts (2, 3) to be connected are provided with connecting flanges (12, 14), which have radially and axially protruding claws (15, 16), which bear the journals (11, 13) for the joints (10), the journals (11, 13) of the claws (15, 16) likewise being arranged parallel in relation to one another and symmetrical in relation to the centre of the coupling.

2. Coupling according to Claim 1, **characterized in that** the axes (21) of the joints (10) of each jointed lever (9) run parallel in relation to one another.

3. Coupling according to either of Claims 1 and 2, **characterized in that,** in the case of four or six jointed levers (9), the axial plane (22, 23) passes through the centre of the two opposing jointed levers (9).

4. Coupling according to one of Claims 1 to 3, **characterized in that** the axes (21) of the jointed lever couplings (5) lie in a radial plane (24).

5. Coupling according to one of Claims 1 to 4, **characterized in that** the journals (11, 13) are integrally connected to the claws (15, 16).

6. Coupling according to one of Claims 1 to 5, **characterized in that** the journals (11, 13) have a conical form with an inhibiting or non-inhibiting conical seat.

7. Coupling according to one of Claims 1 to 6, **characterized in that** the joints (10) are provided with spheroidal bearings.

8. Coupling according to one of Claims 1 to 7, **characterized in that** at least one of the joints (10) of a jointed lever (9) is provided with a cylindrical bearing.

9. Coupling according to one of Claims 1 to 8, **characterized in that** the elastomer layer (17) of the bearings is connected to the adjacent metal parts by vulcanization.

10. Coupling according to one of Claims 1 to 9, **characterized in that** the jointed levers (9) are provided with protruding holding lugs (18) on their outer bearing shells.

11. Coupling according to one of Claims 1 to 10, **characterized in that** the journals (36) are fastened by means of stud bolts (37) to the flanges (12, 14) of the intermediate shaft (4) or the machine parts (7, 8) to be connected.

12. Coupling according to one of Claims 1 to 11, **characterized in that** the jointed levers (9) are formed in a lamellar manner in the axial direction of the intermediate shaft (4).

## Revendications

1. Accouplement (1) pour relier des parties de machine (2, 3) motrices et entraînées telles que des arbres, des moyeux de roue ou leur équivalent à partir d'un arbre intermédiaire (4) et d'accouplements de levier articulé (5) disposés au niveau des extrémités de l'arbre intermédiaire (4), lesdits accouplements comportant au moins respectivement trois leviers articulés (9) identiques qui s'engrènent par l'intermédiaire de leurs articulations (10) élastiques disposées au niveau de leurs extrémités d'une part à l'arbre intermédiaire (4) et d'autre part à la partie de machine (2, 3) connexe à relier, les axes (21) des articulations élastiques (10) d'un de ces leviers articulés (9) étant orientés perpendiculairement dans un plan axial (22, 23) traversant l'axe (8) de l'arbre intermédiaire (4) et/ou les axes (6, 7) des parties de machine (2, 3) à relier et s'étendant parallèlement aux leviers articulés (9), **caractérisé en ce que** l'arbre intermédiaire (4) et les parties de machine (2, 3) à relier sont équipées de brides de raccordement (12, 14) dotées de mâchoires (15, 16) saillant dans le plan radial et axial qui soutiennent les tourillons (11, 13) des articulations (10), les tourillons (11, 13) des mâchoires (15, 16) étant également disposés parallèlement entre eux ainsi que symétriquement par rapport au centre de l'accouplement.

2. Accouplement selon la revendication 1, **caractérisé en ce que** les axes (21) des articulations (10) de chacun des leviers articulés (9) s'étendent parallèlement les uns par rapport aux autres.

3. Accouplement selon l'une quelconque des revendications 1 ou 2, **caractérisé en ce qu'**en présence de quatre ou six leviers articulés (9), le plan axial (22, 23) conduit au milieu des deux leviers articulés (9) opposés.

4. Accouplement selon l'une quelconque des revendications 1 à 3, **caractérisé en ce que** les axes (21) des accouplements de levier articulé (5) se situent dans un plan radial (24).

5. Accouplement selon l'une quelconque des revendications 1 à 4, **caractérisé en ce que** les tourillons (11, 13) sont intégralement reliés aux mâchoires (15, 16).

6. Accouplement selon l'une quelconque des revendications 1 à 5, **caractérisé en ce que** les tourillons (11, 13) prennent une forme de cône avec un siège de cône ralentissant ou non ralentissant.

7. Accouplement selon l'une quelconque des revendications 1 à 6, **caractérisé en ce que** les articulations (10) sont pourvues de paliers sphériques.

8. Accouplement selon l'une quelconque des revendications 1 à 7, **caractérisé en ce qu'**au moins une des articulations (10) d'un levier articulé (9) est équipée d'un palier cylindrique.

9. Accouplement selon l'une quelconque des revendications 1 à 8, **caractérisé en ce que** la couche (17) élastomère du palier est reliée par vulcanisation aux parties métalliques connexes.

10. Accouplement selon l'une quelconque des revendications 1 à 9, **caractérisé en ce que** les leviers articulés (9) sont pourvus au niveau de leurs coques de palier extérieures de becs d'arrêt (18) saillants.

11. Accouplement selon l'une quelconque des revendications 1 à 10, **caractérisé en ce que** les tourillons (36) sont fixés par l'intermédiaire de goujons filetés (37) aux brides (12, 14) de l'arbre intermédiaire (4) et/ou aux parties de machine (7, 8) à joindre.

12. Accouplement selon l'une quelconque des revendications 1 à 11, **caractérisé en ce que** les leviers articulés (9) prennent la forme de lamelles dans la direction axiale de l'arbre intermédiaire (4).
